# FASCICULE DE BREVET EUROPEEN

(11) **EP 1 731 336 B1**
(45) Date de publication et mention de la délivrance du brevet: **12.08.2009**
(21) Numéro de dépôt: 05300456.0
(22) Date de dépôt: 06.06.2005
(51) Int. Cl.: B60G 21/055

(54) **Système de régulation variable de la torsion pour suspension de véhicule**
Regelbares Torsionsystem für Fahrzeugaufhängung
Variable rate torsion control system for vehicle suspension

(43) Date de publication de la demande: 13.12.2006
(73) Titulaire: Delphi Technologies, Inc., Troy, MI 48007 (US)
(72) Inventeur: Barth, Laurent, 60200 Compiegne (FR); Delayre, Xavier, 92400 Courbevoie (FR)
(74) Mandataire: Denton, Michael John

(56) Documents cités:
- EP-A- 1 514 705
- FR-A- 2 836 093
- PATENT ABSTRACTS OF JAPAN vol. 2000, no. 10, 17 novembre 2000 (2000-11-17) & JP 2000 203232 A (SAKUGI SADAO), 25 juillet 2000 (2000-07-25)

## Description

La présente invention concerne les barres anti-roulis pour véhicule. Plus particulièrement, la présente invention concerne un mécanisme de couplage électromécanique pour barre anti-roulis.

Lorsqu'un véhicule tourne, l'accélération latérale produit un moment, orienté selon l'axe longitudinal du véhicule, entraînant un changement de l'assiette de la caisse du véhicule : les jambes de force des roues placées à l'intérieur du virage subissent une charge différente de celle que subissent les jambes de force des roues placées à l'extérieur du virage. Par rapport à la caisse, les supports de roue se déplacent d'une quantité différente le long de l'axe (quasiment vertical) des jambes de force. Par rapport à l'axe passant par les roues d'un train de roues, la caisse est inclinée d'un angle dit de roulis.

Afin de réduire le roulis d'un véhicule, il est connu de munir le train de roues avant et/ou le train de roues arrière d'un dispositif anti-roulis passif. Ce dernier consiste en une barre de torsion, globalement en forme de U, comportant une portion centrale rectiligne orientée selon l'axe des roues du train de roues, et deux bras situés à chacune des extrémités de ladite portion centrale et s'étendant globalement perpendiculairement à cette dernière. La portion centrale est liée à la caisse par une liaison de type pivot permettant une rotation de la barre autour de l'axe de la portion centrale. Les extrémités libres des bras sont respectivement reliées à chacun des supports de roue (par exemple, sur le porte moyeu ou la portion inférieure de la jambe de force de chacune des roues).

Dans un virage, la différence de quantité de déplacement vertical des supports de roue déforme la barre de torsion de manière à ce qu'un angle de torsion apparaisse entre les bras de celle-ci. Un couple de rappel élastique est alors créé, s'opposant au mouvement des supports de roue et réduisant le mouvement de roulis de la caisse. Aucune énergie n'est apportée au dispositif anti-roulis qui est alors qualifié de passif.

Bien que le roulis du véhicule soit amélioré dans les virages et, par voie de conséquence, le confort des passagers, la barre de torsion réduit l'isolation de la caisse par rapport à la route. En ligne droite, un choc causé par une aspérité sur la route sera ressenti par les passagers. De plus, la maniabilité du véhicule est modifiée.

Des dispositifs anti-roulis actifs sont connus. Par exemple, le document US 6 425 585 divulgue un dispositif anti-roulis actif électromécanique. Dans ce dispositif, la barre anti-roulis en forme de U est constituée de deux demi-barres reliées l'une à l'autre au niveau de la portion centrale de la barre anti-roulis au moyen d'un mécanisme de couplage. Ce type de dispositif est qualifié d'actif car le mécanisme de couplage est apte à générer et appliquer un contre-couple entre les deux demi-barre. Il est nécessaire d'apporter de l'énergie au mécanisme de couplage pour générer ce contre-couple.

Des dispositifs anti-roulis semi-actifs électromécaniques sont également connus qui permettent un couplage ou un découplage sélectif des première et deuxième demi-barres. Aucune précontrainte n'est alors appliquée entre les deux demi-barres, et de tels dispositifs anti-roulis semi-actifs ne nécessitent pas d'apport d'énergie pour créer un contre-couple. Le document EP 1 157 865 divulgue une série de modes de réalisation d'un dispositif anti-roulis semi-actif électromécanique comportant des embrayages, des freins ou l'équivalent permettant de coupler/découpler les deux demi-barres en fonction d'une commande émise par une unité de contrôle sur la base de mesures du déplacement des jambes de force relevées par des capteurs appropriés. Le couplage/découplage peut être par exemple du type "tout ou rien" ou du type "proportionnel" de manière à ce qu'un impact sur une roue ne soit pas transmis à l'autre roue. Dans certains mode de réalisation de ce document, il est nécessaire d'apporter une quantité d'énergie importante pour maintenir le dispositif dans un état couplé ou découplé. Dans d'autre mode de réalisation, il est nécessaire d'apporter une quantité d'énergie importante pour commuter le dispositif d'un état couplé à un état découplé ou inversement. De plus, il est nécessaire que le véhicule soit dans un état dans lequel la barre de torsion n'est pas tordue pour passer d'un état totalement ou partiellement découplé à l'état couplé, pour éviter que la barre anti-roulis n'applique en permanence un couple de rappel même quand cela n'est pas nécessaire.

Le document EP 0 974 477 décrit une barre anti-roulis comprenant un mécanisme de couplage semi-passif à raideur variable. Le mécanisme de couplage comprend un couplage à fluide rempli de fluide électrorhéologique. Pour que ce mécanisme présente une raideur donnée, il est nécessaire d'appliquer en permanence un champ électrique d'amplitude correspondante au fluide électrorhéologique. Ce mécanisme nécessite donc une grande quantité d'énergie. De plus, le couplage à fluide doit présenter des méandres et être bien étanche. Il est donc volumineux et coûteux.

Le document JP 2000 203 232 présente un mécanisme de couplage comprenant deux demi barres reliées entre elles par un élément de section rectangulaires dont la déformation en torsion est controlée par un élément coulissant.

L'invention a pour but de résoudre au moins certains des inconvénients précités.

L'invention fournit donc un mécanisme de couplage pour barre antiroulis de véhicule comprenant une première pièce apte à être fixée à une première demi-barre, une deuxième pièce apte à être fixée à une deuxième demi-barre, la deuxième pièce étant agencée de manière à être mobile en rotation autour d'un axe de rotation A par rapport à la première pièce, caractérisé en ce qu'il comprend au moins un élément allongé élastiquement déformable couplé aux première et deuxième pièces de manière qu'une rotation relative des première et deuxième pièces autour du axe de rotation A entraîne une déformation élastique de flexion dudit au moins un élément allongé, le mécanisme comprenant un actionneur apte à positionner ledit au moins un élément allongé dans un premier état dans lequel ledit au moins un élément allongé présente, pour ladite déformation élastique de flexion, une première raideur de flexion, et un deuxième état dans lequel ledit au moins un élément allongé présente, pour ladite déformation élastique de flexion, une deuxième raideur de flexion.

Ce mécanisme présente donc une raideur de torsion variable, et ne consomme pas beaucoup d'énergie. En effet, la seule énergie nécessaire est celle qu'il faut à l'actionneur pour positionner le au moins un élément allongé dans un état donné. De plus, il est possible de passer du premier état au deuxième état et inversement même quand la première pièce et la deuxième pièce sont en rotation relative par rapport à une position neutre. Ainsi, grâce à ce mécanisme, il est possible de changer sélectivement la raideur d'une barre anti-roulis pendant la conduite d'un véhicule. Enfin, les efforts transmis par une demi-barre à l'autre sont supportés par le ou les éléments allongés de sorte qu'il n'est pas nécessaire de faire supporter ces efforts par un actionneur. Autrement dit, ce mécanisme de couplage convient pour réaliser un dispositif anti-roulis semi-actif.

De préférence, ledit au moins un élément allongé est agencé sensiblement parallèlement audit axe de rotation A desdites première et deuxième pièces, ledit au moins un élément allongé étant couplé auxdites première et deuxième pièces en des points d'accouplement situés à distance dudit axe de rotation A, ledit au moins un élément allongé étant mobile en rotation au moins autour de son axe longitudinal par rapport auxdites première et deuxième pièces, ledit actionneur étant apte à faire tourner ledit au moins un élément allongé autour de l'axe longitudinal dudit élément allongé.

Grâce à ces caractéristiques, l'énergie consommée est particulièrement faible car la rotation d'un élément allongé autour de son axe longitudinal ne nécessite qu'une faible énergie.

Avantageusement, ledit au moins un élément allongé possède une section transversale qui présente, selon un premier axe z, un premier moment d'inertie, et selon un deuxième axe y, un deuxième moment d'inertie, ladite déformation élastique de flexion étant une flexion perpendiculairement à un axe de flexion Z, ledit premier axe z correspondant audit axe de flexion Z dans ledit premier état, ledit deuxième axe y correspondant audit axe de flexion Z dans ledit deuxième état.

Ainsi, ledit au moins un élément allongé peut être facilement réalisé sous forme d'une tige de section non-circulaire.

Selon un mode de réalisation particulier, ledit au moins un élément allongé est cylindrique de section rectangulaire.

De préférence, ledit au moins un élément allongé est réalisé en matériau orthotrope.

L'utilisation d'un matériau orthotrope permet également de réaliser un élément allongé, par exemple à section circulaire, présentant une première et une deuxième raideurs de flexion. De plus, en combinaison avec les caractéristiques ci-dessus relatives au moment d'inertie, il est possible d'accentuer la différence entre la première et la deuxième raideur de flexion.

Avantageusement, le mécanisme comprend au moins une butée agencée de manière à définir ledit premier état et/ou ledit deuxième état dudit au moins un élément allongé.

Ainsi, la commande de l'actionneur peut être réalisée de façon simple, car il suffit que l'actionneur déplace l'élément allongé jusqu'à ce qu'il soit détecté que ce dernier arrive dans une position de butée.

De préférence, ledit actionneur est apte à positionner ledit au moins un élément allongé dans une pluralité d'états correspondant, pour ladite déformation élastique de flexion, à une pluralité de raideurs de flexion dudit au moins un élément allongé.

Grâce à ces caractéristiques, le mécanisme de couplage à raideur de torsion variable peut présenter plus de deux raideurs de torsion différentes.

De préférence, ledit au moins un élément allongé est couplé à au moins l'une desdites première et deuxième pièces de manière rotative, par une liaison en pivot, ledit actionneur étant apte à faire tourner ledit au moins un élément allongé.

Avantageusement, ledit au moins un élément allongé est couplé à l'une desdites première et deuxième pièces de manière rotative, par une liaison en rotule.

De préférence, le mécanisme comprend plusieurs éléments allongés uniformément répartis autour dudit axe de rotation A.

Avantageusement, ledit actionneur est accouplé auxdits éléments allongés par un mécanisme de transmission synchrone coopérant avec ledit actionneur pour positionner conjointement lesdits éléments allongés de manière que tous les éléments allongés soient positionnés toujours dans un état sensiblement identique correspondant à une raideur de flexion sensiblement identique, pour ladite déformation élastique de flexion.

De préférence, ledit actionneur est accouplé auxdits éléments allongés par un mécanisme de transmission coopérant avec ledit actionneur pour positionner ledit au moins un élément allongé, ledit mécanisme de transmission étant un mécanisme irréversible apte à transmettre un effort moteur depuis ledit actionneur vers ledit au moins un élément allongé sans transmettre substantiellement les efforts depuis ledit au moins un élément allongé vers ledit actionneur.

Avantageusement, ledit actionneur est un moteur électrique.

De préférence, ladite première pièce comprend un boîtier protégeant ledit actionneur et ledit au moins un élément allongé, ledit actionneur étant fixé audit boîtier.

L'invention fournit également un dispositif antiroulis semi-actif électromécanique pour équiper un train de roues d'un véhicule automobile dans lequel chacune des roues dudit train de roues est couplée avec une mobilité verticale à une caisse dudit véhicule, ledit dispositif anti-roulis comportant une barre de torsion en forme de U ayant une portion centrale destinée à être montée solidairement à ladite caisse et parallèlement à un axe dudit train de roues, et des premier et deuxième bras latéraux dont les extrémités libres sont destinées à être respectivement couplées à des supports desdites roues ; ladite barre de torsion étant composée d'une première demi-barre et d'une deuxième demi-barre reliées l'une à l'autre au niveau de ladite portion centrale au moyen d'un mécanisme de couplage à raideur de torsion variable apte à être commandé pour coupler lesdites première et deuxième demi-barres entre elles avec une raideur variable, caractérisé en ce que ledit mécanisme de couplage est un mécanisme selon l'objet de l'invention ci-dessus.

De préférence, le dispositif comprend au moins un capteur apte à mesurer au moins une variable cinématique dudit véhicule ; et, une unité de commande apte à acquérir ladite au moins une variable cinématique, et à émettre un signal de commande correspondant à ladite variable cinématique en direction dudit mécanisme de couplage pour actionner ce dernier.

Avantageusement, le dispositif comprend un capteur destiné à être manipulé par un conducteur dudit véhicule pour actionner ledit mécanisme de couplage.

L'invention fournit également un véhicule comprenant un dispositif antiroulis selon l'objet de l'invention ci-dessus.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés. Sur ces dessins :
- la figure 1 est une vue partielle schématique d'un véhicule équipé d'une barre anti-roulis comprenant un mécanisme de couplage selon un mode de réalisation de la présente invention ;
- la figure 2 est une vue en perspective de la barre anti-roulis et du mécanisme de couplage de la figure 1 ;
- la figure 3 est une vue en coupe axiale de la barre anti-roulis et du mécanisme de couplage de la figure 1 ;
- la figure 4 est une vue en coupe du mécanisme de couplage de la figure 3, selon la ligne IV-IV de la figure 3 ;
- la figure 5 est une vue en coupe du mécanisme de couplage de la figure 3 dans un premier état, selon la ligne V-V de la figure 3;
- la figure 6 est une vue analogue à la figure 5 montrant le mécanisme de couplage dans un deuxième état ;
- les figures 7 et 8 sont des vues similaires aux figures 5 et 6, représentant une variante du mécanisme de couplage de la figure 3 ;
- la figure 9 est une vue similaire à la figure 1, dans laquelle un véhicule est équipé d'une barre anti-roulis passive, selon l'art antérieur ;
- les figures 10 et 11 représentent la barre anti-roulis de la figure 9;
- la figure 12 est une représentation schématique de la déformation d'un élément allongé du mécanisme de couplage de la figure 3 ;
- les figures 13 et 14 représentent des exemples de comportement de roulis du véhicule de la figure 1, selon deux variantes ;
- la figure 15 est une vue similaire à la figure 3, représentant le mécanisme de couplage de la figure 1 avec une variante de mécanisme de transmission ; et,
- la figure 16 est une vue en coupe du mécanisme de couplage de la figure 15, selon la ligne XVI-XVI de la figure 15.

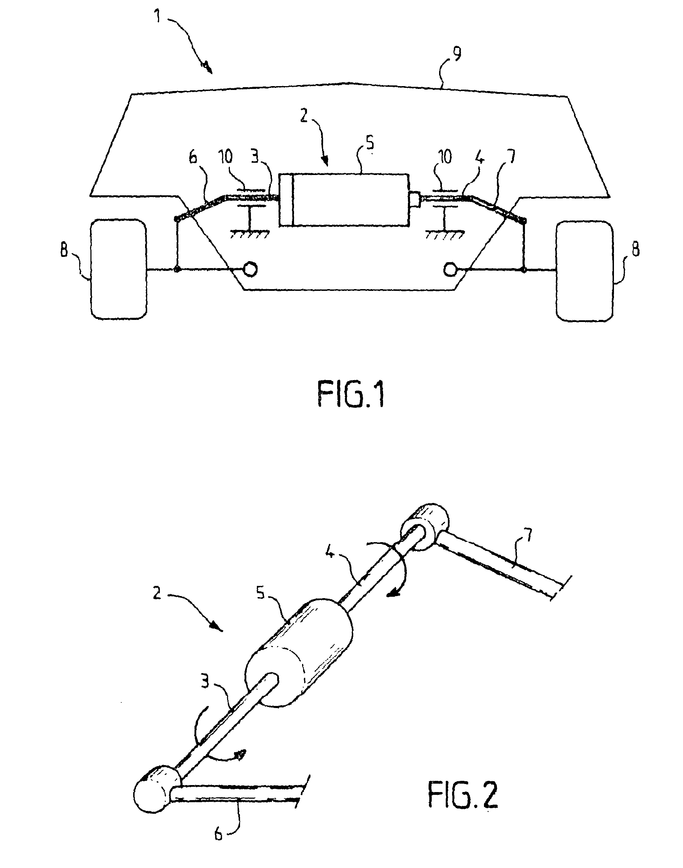

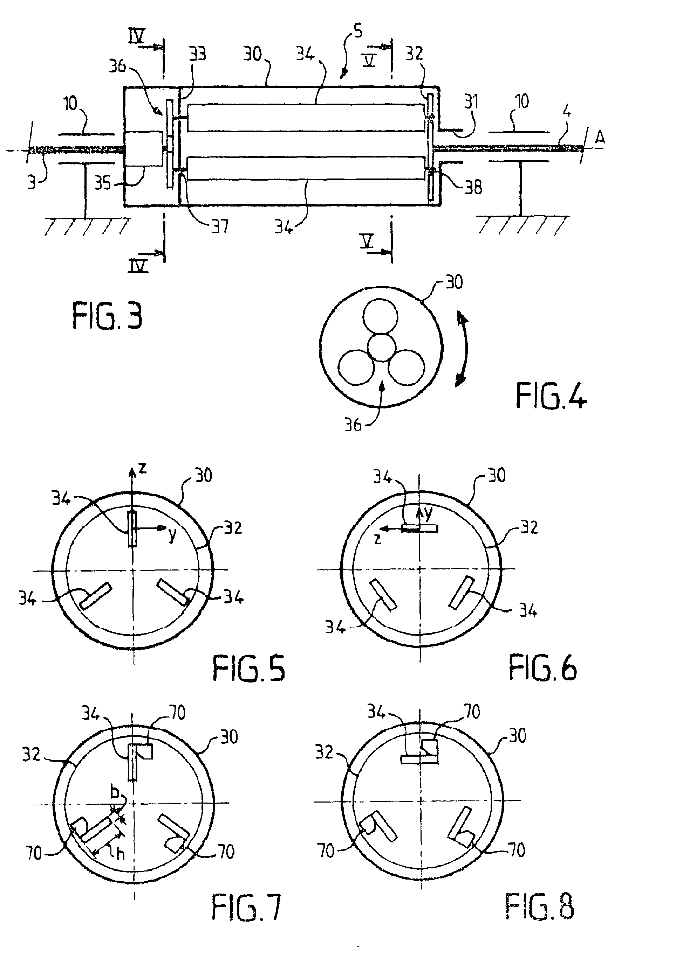

En référence aux figures 1 et 2, le véhicule 1 est équipé d'un dispositif anti-roulis 2 semi-actif. Le dispositif anti-roulis 2 comprend une portion centrale composée de deux demi-barres 3 et 4 alignées selon un axe A (figure 3) parallèle à l'axe du train de roues 8. Il peut s'agir du train de roues avant et/ou arrière. Les demi-barres 3 et 4 sont reliées par un mécanisme de couplage 5.

Le dispositif 2 comprend également deux bras latéraux 6 et 7 reliés aux extrémités des demi-barres 3 et 4 de manière à former une barre de torsion en forme de U. Les extrémités des bras latéraux 6 et 7 sont couplées à des supports des roues 8, par exemple aux jambes de forces des roues 8. Les demi-barres 3 et 4 sont couplées à la caisse 9 du véhicule 1 par l'intermédiaire de paliers de liaison en pivot 10.

Quand, dans un virage, la caisse 9 s'incline selon un angle de roulis α donné, le dispositif anti-roulis est dans un état de torsion selon un angle de torsion par unité de longueur θ qui dépend de l'angle α.

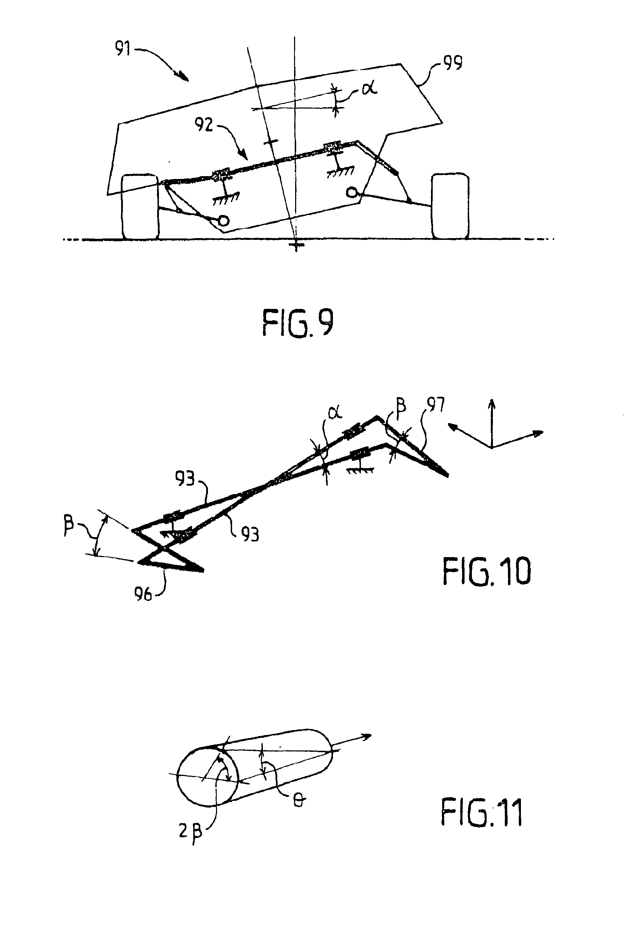

Les figures 9, 10 et 11 illustrent la relation entre l'angle de roulis α et l'angle de torsion θ, pour un véhicule 91 équipé d'une barre anti-roulis 92 passive selon l'art antérieur, comprenant une portion centrale 93 de longueur 1_{c} et deux bras latéraux 96 et 97 de longueur R. Sur la figure 10, la barre 92 est représentée dans sa position neutre, c'est-à-dire quand l'inclinaison de la caisse 99 est nulle, et dans une position correspondant à un angle de roulis α. Comme on le voit sur la figure 11, l'angle de torsion θ est donné par θ = 2 β / 1_{c}, avec la relation β R = α 1_{c}/2, comme on le voit sur la figure 10. Ainsi on a θ = α / R. Quand la caisse 99 est inclinée d'un angle α, la barre anti-roulis 92 exercent un couple de rappel élastique T qui tend à ramener la caisse 99 dans sa position neutre, avec T = G θ I₀. Dans cette expression, G est le module d'élasticité transversale du matériau de la barre 92, et I₀ est le moment d'inertie de la portion centrale 93 et vaut, dans le cas d'une portion centrale 93 cylindrique de section circulaire de rayon r, I₀ = *π* (2r)⁴/32. On appelle raideur de torsion de la barre anti-roulis le rapport entre le couple de rappel T et l'angle de torsion par unité de longueur θ. Comme on le voit, dans la barre 92, la raideur de torsion est constante. On peut également exprimer le couple T en fonction de l'angle de roulis α : T = GI₀α/R.

Le dispositif 2 présente aussi une certaine raideur de torsion mais dans ce cas, le mécanisme de couplage 5 permet de faire varier cette raideur de torsion, comme on va l'expliquer ci-dessous.

En référence à la figure 3, le mécanisme de couplage 5 comprend un boîtier 30, de forme globalement cylindrique circulaire, dont l'axe coïncide avec l'axe A. Le boîtier 30 présente par exemple un diamètre compris entre 100 et 250 mm, et une longueur comprise entre 200 et 800 mm. La demi-barre 3 est fixée solidairement à une des extrémités du boîtier 30. A son extrémité opposée, le boîtier 30 est couplé de manière mobile en rotation avec la demi-barre 4. La demi-barre 4 est fixée solidairement à une plaque circulaire 32, agencée à l'intérieur du boîtier 30. Ainsi, une rotation relative des demi-barres 3 et 4 autour de l'axe A entraîne une rotation relative du boîtier 30 par rapport à la plaque 32 autour de l'axe A.

Dans l'exemple représenté, la demi-barre 4 pénètre dans le boîtier 30 par un alésage 31, au niveau duquel le boîtier 30 et la demi-barre 4 sont couplés par une liaison du type pivot. Selon une variante, la liaison du type pivot peut se situer entre la plaque 32 et le boîtier 30.

Le boîtier 30 présente une paroi transversale 33 agencée parallèlement à la plaque 32. Entre la paroi transversale 33 et la plaque 32, le boîtier 30 comprend trois tiges flexibles 34. Les tiges 34 sont réalisées en matériau élastiquement déformable, par exemple en acier ou en matériau composite. Les tiges 34 sont couplées à la paroi 33 par des liaisons 37, réparties sur la paroi 33 à distance de l'axe A et à 120° les unes des autres. En variante, il pourrait y avoir plus ou moins de trois tiges flexibles 34, réparties uniformément autour de l'axe A. Les liaisons 37 sont du type pivot, permettant une rotation des tiges flexibles 34 autour de leur axe longitudinal, par rapport à la paroi 33.

Les tiges 34 sont également couplées à la plaque 32 par des liaisons 38. Quand le mécanisme de couplage 5 est dans une position neutre, correspondant à un angle de torsion nul du dispositif anti-roulis 2, les liaisons 38 sont situées en correspondance des liaisons 37, de sorte que les tiges flexibles s'étendent parallèlement à l'axe A. Les liaisons 38 sont du type pivot ou du type rotule, permettant une rotation des tiges flexibles 34 au moins autour de leur axe longitudinal, par rapport à la plaque 32.

Comme expliqué ci-dessous, lors du fonctionnement du mécanisme de couplage 5, les tiges flexibles 34 se déforme en flexion suite à une rotation relative du boîtier 30 et de la plaque 32. Le choix de liaisons 38 du type pivot ou rotule entraîne des conditions aux limites particulières qui conduisent à un comportement en flexion particulier. Une rotation relative du boîtier 30 et de la plaque 32 entraîne une augmentation de la distance entre les liaisons 37 et les liaisons 38 correspondantes. De préférence, pour compenser cette augmentation, les liaisons 38 permettent un glissement des tiges flexibles 34. Par exemple les liaisons 38 sont des pivots glissants ou des rotules glissantes.

Le boîtier 30 comprend également un moteur 35 et un mécanisme de transmission 36. Le moteur 35 est fixé au boîtier 30 et coopère avec le mécanisme de transmission 36. Le mécanisme de transmission 36 peut être de tout type approprié. Comme on le voit sur la figure 4, le mécanisme de transmission 36 est par exemple un mécanisme à engrenages planétaires qui assure un déplacement synchrone des trois tiges 34. Par rapport aux tiges flexibles 34, le moteur 35 et le mécanisme de transmission 36 sont situés du côté opposé de la paroi 33. Les tiges 34 comprennent des portions d'extrémité qui traversent la paroi 33 et sont couplées au mécanisme de transmission 36. Ainsi, le moteur 35 permet de faire tourner les tiges 34 autour de leur axe longitudinal, par rapport au boîtier 30 et à la plaque 32. On remarquera qu'aucune force significative ne s'oppose à la rotation des tiges 34 autour de leur axe longitudinal, du moins lorsque la barre de torsion est en position neutre. Le moteur 35 peut donc être un moteur électrique de faible puissance, donc de faible encombrement et de faible coût.

Le mécanisme de transmission 36 peut être un mécanisme réversible. Cependant, le mécanisme de transmission 36 est de préférence un mécanisme irréversible, c'est-à-dire un mécanisme qui transmet les efforts du moteur 35 vers les tiges 34, sans transmettre sensiblement les efforts depuis les tiges 34 vers le moteur 35. Ainsi, si les tiges 34 tendent à se placer dans une position différente de la position imposée par le moteur 35, par exemple sous l'effet de la gravité ou de la déformation en flexion, le moteur 35 n'aura pas à supporter d'efforts.

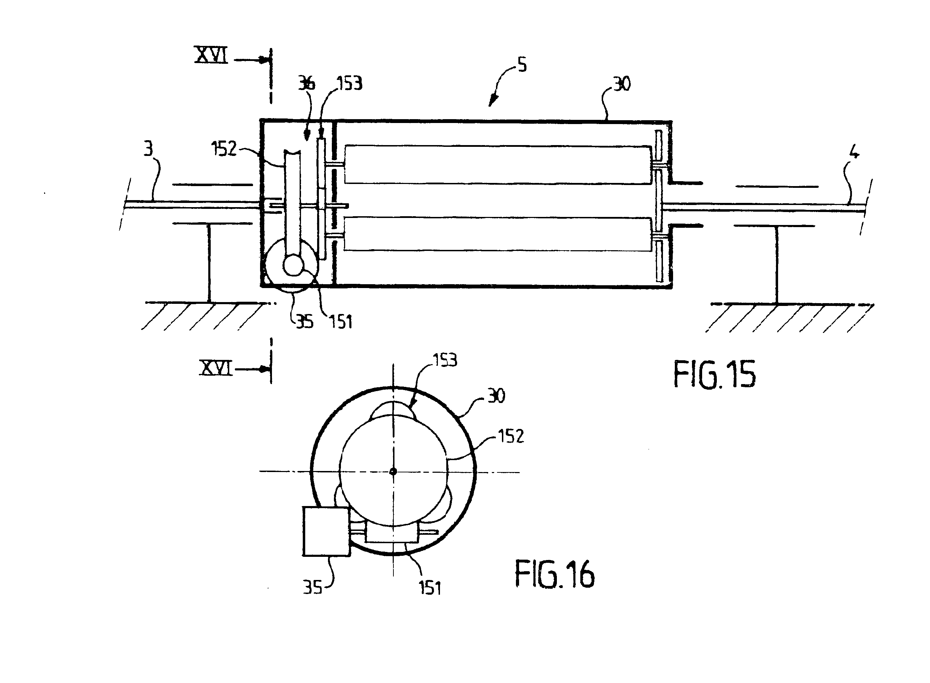

Une variante du mécanisme de transmission 5, dans laquelle le mécanisme de transmission 36 est irréversible, est représenté sur les figures 15 et 16. Sur ces figures, les éléments identiques ou similaires aux éléments de la variante de la figure 3 sont désignés par les mêmes chiffres de référence. Le mécanisme de transmission 36 comprend une vis sans fin 151 de faible diamètre couplée au moteur 35. La vis sans fin 151 est agencée orthogonalement à l'axe A et engrène une roue dentée 152 de grand diamètre couplée aux tiges 34 par l'intermédiaire d'un étage d'engrenages planétaires 153. Le moteur 35 est représenté partiellement à l'extérieur du boîtier 30, dans lequel est ménagé une ouverture appropriée. Bien entendu, selon la forme du boîtier 30 et la taille du moteur 35, le moteur 35 pourrait être entièrement à l'intérieur du boîtier 30 ou entièrement à l'extérieur du boîtier 30, et coopérer avec le mécanisme de transmission 36 par l'intermédiaire d'un axe traversant le boîtier 30.

Alternativement à l'utilisation d'une mécanisme de transmission 36 irréversible, pour empêcher la rotation des tiges 34 et la transmission d'efforts au moteur 35, le mécanisme de couplage 5 pourrait comprendre un frein apte à immobiliser le moteur 35 et/ou le mécanisme de transmission 36.

Lors du fonctionnement du dispositif anti-roulis 2, celui-ci peut être tordu selon un angle de torsion par unité de longueur θ dépendant de l'angle de roulis α. Cet angle de torsion par unité de longueur θ correspond à une torsion des demi-barres 3 et 4, et à une rotation relative du boîtier 30 et de la plaque 32. Dans la suite, par soucis de simplification, on considère que les demi-barres 3 et 4 ont une raideur de torsion bien plus grande que le mécanisme de couplage 5 et que l'angle de torsion θ correspond quasiment entièrement à une rotation relative du boîtier 30 et de la plaque 32 selon l'angle par unité de longueur θ.

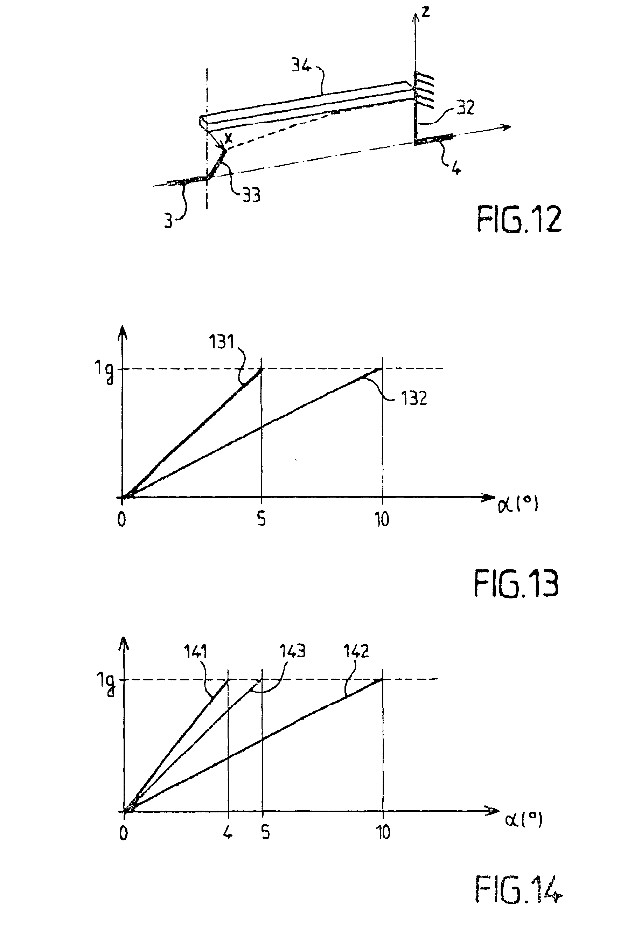

Comme on l'a déjà dit ci-dessus, une rotation relative du boîtier 30 et de la plaque 32 entraîne une déformation élastique de flexion des tiges flexibles 34. La figure 12 représente schématiquement la flexion d'une tige 34. En désignant par R₁ la distance entre l'axe A et la liaison 37 de la tige 34, et par β, 1_{c}, R et T les grandeurs correspondant aux grandeurs β, 1_{c}, R et T décrites ci-dessus en références aux figures 9 à 11, on peut exprimer la déformation de la tige 34 par x = 2.R₁.β = R₁.1_{c}.α / R. Pour une tige 34 couplée à la plaque 32 par pivot, de longueur L, de module d'élasticité E et dont la section transversale présente un moment d'inertie I_{gZ} par rapport à l'axe Z, la déformation x correspond à une force F = 3 E I_{gZ} x / L³. On appelle raideur de flexion de la tige 34 le rapport entre la force F et la déformation x.

Le couple de rappel T exercé par le mécanisme de couplage 5 est donné par T = 3.F.R₁, pour un mécanisme comprenant trois tiges 34. On peut exprimer T en fonction de l'angle α ou de l'angle θ : T = 9.R₁².1_{c}.E.I_{gZ}.α / (R.L³) = 9.R₁².1_{c}.E.I_{gZ}.θ / L³. Comme on le voit dans ces expressions, la raideur de torsion du dispositif 2 dépend de la raideur de flexion des tiges 34. Ainsi, en faisant varier la raideur de flexion des tiges 34, on peut faire varier la raideur de torsion du dispositif 2.

Comme le montre l'expression F = 3.E.I_{gZ}.x / L³ la raideur de flexion des tiges 34 dépend de E et de I_{gZ}. Ainsi, en modifiant l'une et/ou l'autre de ces valeurs, on peut faire varier la raideur de flexion des tiges 34. En références aux figures 5 et 6, le mécanisme 5 permet de faire varier I_{gZ} de la façon suivante : Comme expliqué ci-dessus, le moteur 35 est apte à faire tourner les tiges 34 autour de leur axe longitudinal. Dans l'exemple représenté, les tiges 34 sont des tiges cylindriques de section rectangulaire de côtés h et b. Alternativement, toute section non-circulaire peut convenir, par exemple une section en forme d'ellipse ou de triangle. Ainsi, le moment d'inertie de la section par rapport à un axe dépend de l'axe considéré. Par exemple, dans le cas de la section rectangulaire, le moment d'inertie par rapport à l'axe z est I_{gz} = b³ h /12, et le moment d'inertie par rapport à l'axe y est I_{gy} = b h³ /12.

Quand le moteur 35 place les tiges 34 dans la position représentée sur la figure 5, l'axe z correspond avec l'axe Z de la figure 12, et le moment I_{gZ} est égal au moment I_{gZ}. Dans cet état, la raideur de torsion du dispositif 2 est minimale. Quand le moteur 35 place les tiges 34 dans la position représentée sur la figure 6, l'axe y correspond avec l'axe Z de la figure 12, et le moment I_{gZ} est égal au moment I_{gy}. Dans cet état, la raideur de torsion du dispositif 2 est maximale. Ainsi, le dispositif 2 présente une raideur variable, pouvant prendre au moins deux valeurs distinctes.

Selon une variante, le moteur 35 est apte à positionner les tiges 34 dans plus de deux positions, correspondant à une pluralité de moments d'inertie différents et donc à une pluralité de raideurs de torsion différentes. Le mécanisme 5 peut alors comprendre un capteur de position (non représenté), par exemple un compte-tour lié au moteur 35, pour déterminer dans quelle position sont placées les tiges 34, et commander le moteur 35 de façon appropriée en fonction de la position détectée et d'une position désirée.

Selon une autre variante, représentée sur les figures 7 et 8, le mécanisme 5 comprend au moins une butée 70 qui définit deux positions de butée des tiges 34 correspondant à deux raideurs de torsion du dispositif 2. Sur les figures 7 et 8, on a représenté trois butées 70, fixées à la plaque 32 et coopérant chacune avec une tige 34. De préférence, par soucis d'équilibrage du mécanisme 5, le mécanisme de transmission 36 est un mécanisme synchrone, qui positionne toujours les différentes tiges 34 dans des états correspondant à des raideurs de flexion sensiblement égales. Dans ce cas, il peut n'y avoir qu'une seule butée 70. Alternativement, la butée 70 pourrait être agencée au niveau du mécanisme de transmission 36 ou au niveau du moteur 35. La butée 70 permet d'utiliser un moteur 35 simple, apte à positionner les tiges 34 dans l'une ou l'autre des positions de butée. Par exemple, pour passer d'une position à l'autre, le moteur 35 fait tourner les tiges 34 jusqu'à la détection d'un sur-courant d'alimentation correspondant à l'arrivée en position de butée.

Comme dit précédemment, pour faire varier la raideur de flexion des tiges 34, on peut également modifier le module d'élasticité E. Pour cela, en variante ou en complément à la section non-circulaire, les tiges 34 peuvent être réalisé en matériau orthotrope, c'est-à-dire un matériau présentant, pour une déformation donnée, un module d'élasticité qui dépend de la direction de la déformation. Les matériaux orthotropes sont en général des matériaux composites. Dans ce cas, de manière similaire à ce qui est décrit ci-dessus, le moteur 35 est apte à faire tourner les tiges 34 pour les positionner dans au moins deux positions différentes dans lesquelles la déformation de flexion se fait selon une direction dans laquelle les tiges 34 présentent deux modules d'élasticité différents.

La figure 13 est un graphe qui illustre un exemple de comportement du véhicule 1, pouvant être obtenu dans le cas d'un mécanisme 5 à deux états tel que représenté sur les figures 7 et 8, correspondant à une raideur de torsion minimale et maximale respectivement. Dans ce cas, le mécanisme 5 est par exemple dimensionné pour que sa raideur de torsion maximale corresponde à la raideur de torsion d'une barre anti-roulis conventionnelle selon l'art antérieur. Un tel dimensionnement peut convenir par exemple à un véhicule à quatre roues motrices. Au vu des expressions ci-dessus, l'homme du métier saura réaliser un tel dimensionnement.

La figure 13 représente le lien entre l'accélération latérale du véhicule 1 et l'angle de roulis α. La courbe 131 illustre cette relation quand le mécanisme 5 est dans l'état de la figure 8, et la courbe 132 illustre cette relation quand le mécanisme est dans l'état de la figure 7. Dans l'état de la figure 8, le comportement du véhicule 1 correspond à celui d'un véhicule équipé d'une barre anti-roulis classique, auquel est habitué le conducteur du véhicule 1. Dans l'état de la figure 7, la raideur de torsion du dispositif 2 est plus faible. Il en résulte, pour une accélération latérale donnée, un plus grand angle de roulis α. Dans cet état, le couplage entre les deux roues 8 est plus faible. Un choc sur une des roues 8 sera donc faiblement transmis à l'autre roue. Il en résulte un confort amélioré. Un couplage plus faible présente aussi un avantage dans le cas de la conduite du véhicule 1 sur un terrain accidenté. Dans ce cas, les hauteurs de chaque roue 8 par rapport à la caisse 9 varient régulièrement selon une grande amplitude, et un couplage réduit implique un confort amélioré.

La figure 14 est une vue similaire à la figure 13, dans le cas d'un mécanisme de couplage 5 apte à positionner les tiges 34 dans une pluralité d'états correspondant à une pluralité de raideurs de torsion. La courbe 141 correspond au mécanisme 5 dans l'état de la figure 6, et la courbe 142 correspond au mécanisme 5 dans l'état de la figure 5. Dans ce cas, le mécanisme 5 est par exemple dimensionné pour que la raideur de torsion dans l'état de la figure 6 soit supérieure à la raideur de torsion d'une barre anti-roulis conventionnelle selon l'art antérieur. Une raideur de torsion plus grande offre une meilleure atténuation du roulis. Les tiges 34 du mécanisme 5 peuvent être positionnées dans une pluralité d'états, correspondant à une pluralité de raideur de torsion. Pour chaque raideur de torsion, on peut tracer une courbe correspondante, située entre les courbes 141 et 142. Par exemple, la courbe 143 correspond à une position des tiges 34 dans laquelle la raideur de torsion du dispositif 2 correspond à celle de la barre anti-roulis conventionnelle. Le mécanisme couplage 5 permet donc de régler la raideur de torsion du dispositif 2 entre deux valeurs limites. Pour une situation de conduite donnée, on peut choisir une raideur de torsion correspondant à un compromis approprié entre l'atténuation du roulis et l'atténuation de la transmission d'un choc d'une roue 8 à l'autre.

Comme on l'a vu, le moteur 35 permet de modifier la raideur de torsion du dispositif 2. Selon une variante, le dispositif 2 comprend un bouton, par exemple placé sur le tableau de bord du véhicule 1, qui permet au conducteur du véhicule 1 de commander le moteur 35 pour modifier la raideur de torsion. Par exemple, pour un véhicule à quatre roues motrices, l'état illustré par la courbe 131 (état raide) est utilisé sur route et l'état illustré par la courbe 132 (état souple) est utilisé sur terrain accidenté. Selon une autre variante, le dispositif 2 comprend un contrôleur apte à commander automatiquement le moteur 35 en fonction d'un état du véhicule 1 déterminé à l'aide de capteurs. A cet effet le dispositif 2 peut par exemple comprendre un capteur d'accélération latérale, un capteur d'angle devolant, un capteur de vitesse du véhicule, etc.

Le mécanisme de couplage 5 présente toujours une raideur de torsion résiduelle, ce qui permet au dispositif 2 d'assurer un effet anti-roulis minimal même en cas de défaillance du mécanisme de couplage 5. De plus, l'absence d'état correspondant à un découplage total, c'est-à-dire à une raideur de torsion nulle, présente l'avantage qu'il est toujours possible de passer d'une raideur minimale à une raideur maximale et inversement même quand le boîtier 30 et la plaque 32 sont en rotation relative selon un angle donné, pour autant que cet angle soit inférieur à un seuil donné. Cependant dans certains cas, il peut être intéressant d'avoir un découplage total entre les deux roues 8. Pour cela, le mécanisme 5 peut être placé en série avec un mécanisme de découplage apte à réaliser un découplage total.

Selon une variante du mécanisme de couplage 5, le mécanisme de transmission 36 comprend un embrayage apte à découpler le moteur 35 des tiges 34. Si lors d'une flexion des tiges 34, l'embrayage est dans un état débrayé, les tiges 34 vont naturellement se placer dans l'état de la figure 5 correspondant à la raideur de flexion minimale. Ainsi, selon cette variante, pour positionner les tiges 34 dans la position de la figure 5, il n'est pas nécessaire d'actionner le moteur 35, mais il suffit de débrayer l'embrayage. Dans cette variante, le mécanisme de transmission 36 est de préférence irréversible. En effet, si le mécanisme de transmission est réversible, on peut faire l'économie de l'embrayage et laisser les tiges 34 se placer dans l'état de la figure 5 en n'alimentant pas le moteur 35.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Mécanisme de couplage (5) pour barre antiroulis de véhicule (1) comprenant une première pièce (30) apte à être fixée à une première demi-barre (3), une deuxième pièce (32) apte à être fixée à une deuxième demi-barre (4), ladite deuxième pièce étant agencée de manière à être mobile en rotation autour d'un axe de rotation A par rapport à ladite première pièce, **caractérisé en ce qu'**il comprend au moins un élément allongé (34) élastiquement déformable couplé auxdites première et deuxième pièces de manière qu'une rotation relative desdites première et deuxième pièces autour dudit axe de rotation A entraîne une déformation élastique de flexion dudit au moins un élément allongé, ledit mécanisme comprenant un actionneur (35) apte à positionner ledit au moins un élément allongé dans un premier état dans lequel ledit au moins un élément allongé présente, pour ladite déformation élastique de flexion, une première raideur de flexion, et un deuxième état dans lequel ledit au moins un élément allongé présente, pour ladite déformation élastique de flexion, une deuxième raideur de flexion.

2. Mécanisme selon la revendication 1, **caractérisé par le fait que** ledit au moins un élément allongé est agencé sensiblement parallèlement audit axe de rotation A desdites première et deuxième pièces, ledit au moins un élément allongé étant couplé auxdites première et deuxième pièces en des points d'accouplement (37, 38) situés à distance dudit axe de rotation A, ledit au moins un élément allongé étant mobile en rotation au moins autour de son axe longitudinal par rapport auxdites première et deuxième pièces, ledit actionneur étant apte à faire tourner ledit au moins un élément allongé autour de l'axe longitudinal dudit élément allongé.

3. Mécanisme selon la revendication 1 ou la revendication 2, **caractérisé par le fait que** ledit au moins un élément allongé possède une section transversale qui présente, selon un premier axe z, un premier moment d'inertie, et selon un deuxième axe y, un deuxième moment d'inertie, ladite déformation élastique de flexion étant une flexion perpendiculairement à un axe de flexion Z, ledit premier axe z correspondant audit axe de flexion Z dans ledit premier état, ledit deuxième axe y correspondant audit axe de flexion Z dans ledit deuxième état.

4. Mécanisme selon la revendication 3, **caractérisé par le fait que** ledit au moins un élément allongé est cylindrique de section rectangulaire.

5. Mécanisme selon l'une des revendications 1 à 4, **caractérisé par le fait que** ledit au moins un élément allongé est réalisé en matériau orthotrope.

6. Mécanisme selon l'une des revendications 1 à 5, **caractérisé par le fait qu'**il comprend au moins une butée (70) agencée de manière à définir ledit premier état et/ou ledit deuxième état dudit au moins un élément allongé.

7. Mécanisme selon l'une des revendications 1 à 5, **caractérisé par le fait que** ledit actionneur est apte à positionner ledit au moins un élément allongé dans une pluralité d'états correspondant, pour ladite déformation élastique de flexion, à une pluralité de raideurs de flexion dudit au moins un élément allongé.

8. Mécanisme selon l'une des revendications 1 à 7, **caractérisé par le fait que** ledit au moins un élément allongé est couplé à au moins l'une desdites première et deuxième pièces de manière rotative, par une liaison en pivot (37, 38), ledit actionneur étant apte à faire tourner ledit au moins un élément allongé.

9. Mécanisme selon l'une des revendications 1 à 8, **caractérisé par le fait que** ledit au moins un élément allongé est couplé à l'une desdites première et deuxième pièces de manière rotative, par une liaison en rotule (38).

10. Mécanisme selon l'une des revendications 1 à 9, **caractérisé par le fait qu'**il comprend plusieurs éléments allongés uniformément répartis autour dudit axe de rotation A.

11. Mécanisme selon la revendication 10, **caractérisé par le fait que** ledit actionneur est accouplé auxdits éléments allongés par un mécanisme de transmission synchrone (36) coopérant avec ledit actionneur pour positionner conjointement lesdits éléments allongés de manière que tous les éléments allongés soient positionnés toujours dans un état sensiblement identique correspondant à une raideur de flexion sensiblement identique, pour ladite déformation élastique de flexion.

12. Mécanisme selon l'une des revendications 1 à 11, **caractérisé par le fait que** ledit actionneur est accouplé auxdits éléments allongés par un mécanisme de transmission (36) coopérant avec ledit actionneur pour positionner ledit au moins un élément allongé, ledit mécanisme de transmission étant un mécanisme irréversible apte à transmettre un effort moteur depuis ledit actionneur vers ledit au moins un élément allongé sans transmettre substantiellement les efforts depuis ledit au moins un élément allongé vers ledit actionneur.

13. Mécanisme selon l'une des revendications 1 à 12, **caractérisé par le fait que** ledit actionneur est un moteur électrique.

14. Mécanisme selon l'une des revendications 1 à 13, **caractérisé par le fait que** ladite première pièce comprend un boîtier protégeant ledit actionneur et ledit au moins un élément allongé, ledit actionneur étant fixé audit boîtier.

15. Dispositif antiroulis semi-actif électromécanique (2) pour équiper un train de roues d'un véhicule (1) automobile dans lequel chacune des roues (8) dudit train de roues est couplée avec une mobilité verticale à une caisse (9) dudit véhicule, ledit dispositif anti-roulis comportant une barre de torsion en forme de U ayant une portion centrale destinée à être montée solidairement à ladite caisse et parallèlement à un axe dudit train de roues, et des premier et deuxième bras latéraux (6, 7) dont les extrémités libres sont destinées à être respectivement couplées à des supports desdites roues ; ladite barre de torsion étant composée d'une première demi-barre (3) et d'une deuxième demi-barre (4) reliées l'une à l'autre au niveau de ladite portion centrale au moyen d'un mécanisme de couplage (5) à raideur de torsion variable apte à être commandé pour coupler lesdites première et deuxième demi-barres entre elles avec une raideur variable, **caractérisé en ce que** ledit mécanisme de couplage est un mécanisme selon l'une des revendications 1 à 14.

16. Dispositif selon la revendication 15, **caractérisé par le fait qu'**il comprend au moins un capteur apte à mesurer au moins une variable cinématique dudit véhicule ; et, une unité de commande apte à acquérir ladite au moins une variable cinématique, et à émettre un signal de commande correspondant à ladite variable cinématique en direction dudit mécanisme de couplage pour actionner ce dernier.

17. Dispositif selon la revendication 15, **caractérisé par le fait qu'**il comprend un capteur destiné à être manipulé par un conducteur dudit véhicule pour actionner ledit mécanisme de couplage.

18. Véhicule comprenant un dispositif antiroulis selon l'une des revendications 15 à 17.

## Claims

1. Coupling mechanism (5) for anti-roll bar of a vehicle (1) comprising a first piece (30) able to be fixed to a first half-bar (3), a second piece (32) able to be fixed to a second half-bar (4), the said second piece being so arranged as to be moveable in rotation about an axis of rotation A relative to the said first piece, **characterised by** the fact that it comprises at least one elastically deformable elongate element (34) coupled to the said first and second pieces in such a manner that relative rotation of the said first and second pieces about the said axis of rotation A causes elastic flexure deformation of the said at least one elongate element, the said mechanism comprising an actuator (35) able to position the said at least one elongate element in a first state in which, for the said elastic flexure deformation, the said at least one elongate element presents a first flexure stiffness, and a second state in which, for the said elastic flexure deformation, the said at least elongate element presents a second flexure stiffness.

2. Mechanism as described in claim 1, **characterised by** the fact that the said at least one elongate element is arranged substantially parallel with the said axis of rotation A of the said first and second pieces, the said at least one elongate element being coupled to the said first and second pieces at coupling points (37, 38) situated distant from the said axis of rotation A, the said at least one elongate element being movable in rotation at least about its longitudinal axis relative to the said first and second pieces, the said actuator being able to cause the said at least one elongate element to turn about the longitudinal axis of the said elongate element.

3. Mechanism as described in claim 1 or claim 2, **characterised by** the fact that the said at least one elongate element has a cross-section which has a first moment of inertia in the direction of a first axis z, and a second moment of inertia in the direction of a second axis y, the said elastic flexure deformation being flexure perpendicularly to an axis of flexure Z, the said first axis z corresponding to the said axis of flexure Z in the said first state, the said second axis y corresponding to the said axis of flexure Z in the said second state.

4. Mechanism as described in claim 3, **characterised by** the fact that the said at least one elongate element is cylindrical of rectangular section.

5. Mechanism as described in one of claims 1 to 4, **characterised by** the fact that the said at least one elongate element is made of orthotropic material.

6. Mechanism as described in one of claims 1 to 5, **characterised by** the fact that that it includes at least one stop (70) so arranged as to define the said first state and/or the said second state of the said at least one elongate element.

7. Mechanism as described in one of claims 1 to 5, **characterised by** the fact that the said actuator is able to position the said at least one elongate element in a plurality of states corresponding, for the said elastic flexure deformation, to a plurality of flexure stiffnesses of the said at least one elongate element.

8. Mechanism as described in one of claims 1 to 7, **characterised by** the fact that the said at least one elongate element is coupled to at least one of the said first and second pieces in rotary manner, by a pivot joint (37, 38), the said actuator being able to turn the said at least one elongate element.

9. Mechanism as described in one of claims 1 to 8, **characterised by** the fact that the said at least one elongate element is coupled to one of the said first and second pieces in rotary manner, by a swivel joint (38).

10. Mechanism as described in one of claims 1 to 9, **characterised by** the fact that it includes a plurality of elongate elements uniformly distributed around the said axis of rotation A.

11. Mechanism as described in claim 10, **characterised by** the fact that the said actuator is coupled to the said elongate elements by a synchronous transmission mechanism (36) co-operating with the said actuator to position the said elongate elements jointly so that all the elongate elements are always positioned in a substantially identical state corresponding to a substantially identical flexure stiffness, for the said elastic flexure deformation.

12. Mechanism as described in one of claims 1 to 11, **characterised by** the fact that the said actuator is coupled to the said elongate elements by a transmission mechanism (36) co-operating with the said actuator to position the said at least one elongate element, the said transmission mechanism being an irreversible mechanism able to transmit a drive force from the said actuator to the said at least on elongate element without substantially transmitting the forces from the said at least one elongate element to the said actuator.

13. Mechanism as described in one of claims 1 to 12, **characterised by** the fact that the said actuator is an electric motor.

14. Mechanism as described in one of claims 1 to 13, **characterised by** the fact that the said first piece comprises a case protecting the said actuator and the said at least one elongate element, the said actuator being fixed to the said case.

15. Semi-active electromechanical anti-roll device (2) to be fitted to a wheel-train of a motor vehicle (1) in which each of the wheels (8) of the said wheel-train is coupled with vertical mobility to a body (9) of the said vehicle, the said anti-roll device including a U-shaped torsion bar having a central portion intended to be firmly mounted on the said body and parallel with an axis of the said wheel train, and first and second lateral arms (6, 7) the free ends of which are intended to be respectively coupled to supports of the said wheels; the said torsion bar being composed of a first half-bar (3) and a second half-bar (4) connected to one another at the said central portion by means of a coupling mechanism (5) of variable torsion stiffness able to be controlled to couple the said first and second half-bars to each to each other with variable stiffness, **characterised by** the fact that the said coupling mechanism is a mechanism as described in one of claims 1 to 14.

16. Device as described in claim 15, **characterised by** the fact that it includes at least one sensor able to measure at least one kinematic variable of the said vehicle; and, a control unit able to acquire the said at least one kinematic variable, and to emit a control signal corresponding to the said kinematic variable to the said coupling mechanism to actuate this.

17. Device as described in claim 15, **characterised by** the fact that it includes a sensor intended to be manipulated by a driver of the said vehicle to actuate the said coupling mechanism.

18. Vehicle including an anti-roll device as described in one of claims 15 to 17.

## Patentansprüche

1. Kopplungsmechanismus (5) für einen Stabilisatorstab eines Fahrzeugs (1), umfassend ein erstes Teil (30), das an einer ersten Stabhälfte (3) befestigt werden kann, ein zweites Teil (32), das an einer zweiten Stabhälfte (4) befestigt werden kann, wobei das zweite Teil so angeordnet ist, dass es bezüglich des ersten Teils um eine Drehachse A drehbeweglich ist, **dadurch gekennzeichnet, dass** er mindestens ein elastisch verformbares, langgestrecktes Element (34) umfasst, das mit dem ersten Teil und dem zweiten Teil so gekoppelt ist, dass eine Relativdrehung des ersten und des zweiten Teils um die Drehachse A eine elastische Biegeverformung des mindestens einen langgestreckten Elements mit sich bringt, wobei der Mechanismus ein Stellglied (35) umfasst, das das mindestens eine langgestreckte Element in einem ersten Zustand positionieren kann, in dem das mindestens eine langgestreckte Element bei der elastischen Biegeverformung eine erste Biegesteifheit aufweist, und in einem zweiten Zustand, in dem das mindestens eine langgestreckte Element bei der elastischen Biegeverformung eine zweite Biegesteifheit aufweist.

2. Mechanismus nach Anspruch 1, **dadurch gekennzeichnet, dass** das mindestens eine langgestreckte Element im Wesentlichen parallel zu der Drehachse A des ersten und des zweiten Teils angeordnet ist, wobei das mindestens eine langgestreckte Element mit dem ersten und dem zweiten Teil an Kopplungspunkten (37, 38) gekoppelt ist, die in einem Abstand von der Drehachse A gelegen sind, wobei das mindestens eine langgestreckte Element mindestens um seine Längsachse bezüglich des ersten und des zweiten Teils drehbeweglich ist, wobei das Stellglied das mindestens eine langgestreckte Element um die Längsachse des langgestreckten Elements sich drehen lassen kann.

3. Mechanismus nach Anspruch 1 oder Anspruch 2, **dadurch gekennzeichnet, dass** das mindestens eine langgestreckte Element einen Querschnitt besitzt, der gemäß einer ersten Achse z ein erstes Trägheitsmoment und gemäß einer zweiten Achse y ein zweites Trägheitsmoment aufweist, wobei die elastische Biegeverformung eine Biegung senkrecht zu einer Biegungsachse Z ist, wobei die erste Achse z der Biegungsachse Z im ersten Zustand entspricht, wobei die zweite Achse y der Biegungsachse Z im zweiten Zustand entspricht.

4. Mechanismus nach Anspruch 3, **dadurch gekennzeichnet, dass** das mindestens eine langgestreckte Element zylindrisch mit rechteckigem Querschnitt ist.

5. Mechanismus nach einem der Ansprüche 1 bis 4, **dadurch gekennzeichnet, dass** das mindestens eine langgestreckte Element aus einem orthotropen Werkstoff hergestellt ist.

6. Mechanismus nach einem der Ansprüche 1 bis 5, **dadurch gekennzeichnet, dass** er mindestens einen Anschlag (70) umfasst, der so angeordnet ist, dass er den ersten Zustand und/oder den zweiten Zustand des mindestens einen langgestreckten Elements definiert.

7. Mechanismus nach einem der Ansprüche 1 bis 5, **dadurch gekennzeichnet, dass** das Stellglied das mindestens eine langgestreckte Element in einer Mehrzahl von Zuständen positionieren kann, die einer Mehrzahl von Biegesteifheiten des mindestens einen langgestreckten Elements bei der elastischen Biegeverformung entsprechen.

8. Mechanismus nach einem der Ansprüche 1 bis 7, **dadurch gekennzeichnet, dass** das mindestens eine langgestreckte Element mit mindestens einem des ersten und des zweiten Teils durch eine Drehzapfenverbindung (37, 38) drehbar gekoppelt ist, wobei das Stellglied das mindestens eine langgestreckte Element sich drehen lassen kann.

9. Mechanismus nach einem der Ansprüche 1 bis 8, **dadurch gekennzeichnet, dass** das mindestens eine langgestreckte Element mit einem des ersten und des zweiten Teils durch eine Kugelgelenkverbindung (38) drehbar gekoppelt ist.

10. Mechanismus nach einem der Ansprüche 1 bis 9, **dadurch gekennzeichnet, dass** er mehrere langgestreckte Elemente umfasst, die um die Drehachse A herum gleichmäßig verteilt sind.

11. Mechanismus nach Anspruch 10, **dadurch gekennzeichnet, dass** das Stellglied mit den langgestreckten Elementen durch einen synchronen Übertragungsmechanismus (36) gekoppelt ist, der mit dem Stellglied zusammenwirkt, um die langgestreckten Elemente gleichzeitig so zu positionieren, dass alle langgestreckten Elemente immer in einem im Wesentlichen identischen Zustand sind, der einer im Wesentlichen identischen Biegesteifheit bei der elastischen Biegeverformung entspricht.

12. Mechanismus nach einem der Ansprüche 1 bis 11, **dadurch gekennzeichnet, dass** das Stellglied mit den langgestreckten Elementen durch einen Übertragungsmechanismus (36) gekoppelt ist, der mit dem Stellglied zusammenwirkt, um das mindestens eine langgestreckte Element zu positionieren, wobei der Übertragungsmechanismus ein irreversibler Mechanismus ist, der eine Antriebskraft von dem Stellglied zu dem mindestens einen langgestreckten Element übertragen kann, ohne im Wesentlichen die Kräfte von dem mindestens einen langgestreckten Element zum Stellglied zu übertragen.

13. Mechanismus nach einem der Ansprüche 1 bis 12, **dadurch gekennzeichnet, dass** das Stellglied ein Elektromotor ist.

14. Mechanismus nach einem der Ansprüche 1 bis 13, **dadurch gekennzeichnet, dass** das erste Teil ein Gehäuse umfasst, das das Stellglied und das mindestens eine langgestreckte Element schützt, wobei das Stellglied am Gehäuse befestigt ist.

15. Halbaktive elektromechanische Stabilisatorvorrichtung (2) für einen Radsatz eines Kraftfahrzeugs (1), bei dem jedes der Räder (8) des Radsatzes mit einer vertikalen Beweglichkeit mit einem Aufbau (9) des Fahrzeugs gekoppelt ist, wobei die Stabilisatorvorrichtung einen U-förmigen Torsionsstab umfasst, der einen Mittelteil, der dazu bestimmt ist, an dem Aufbau fest und parallel zu einer Achse des Radsatzes montiert zu werden, und einen ersten und einen zweiten seitlichen Arm (6, 7) aufweist, deren freie Enden dazu bestimmt sind, jeweilig mit Haltern der Räder gekoppelt zu werden; wobei der Torsionsstab aus einer ersten Stabhälfte (3) und aus einer zweiten Stabhälfte (4) zusammengesetzt ist, die auf Höhe des Mittelteils mit Hilfe eines Kopplungsmechanismus (5) mit veränderlicher Torsionssteifheit miteinander verbunden sind, der gesteuert werden kann, um die erste und zweite Stabhälfte mit einer veränderlichen Steifheit miteinander zu verbinden, **dadurch gekennzeichnet, dass** der Kopplungsmechanismus ein Mechanismus nach einem der Ansprüche 1 bis 14 ist.

16. Vorrichtung nach Anspruch 15, **dadurch gekennzeichnet, dass** sie mindestens einen Fühler, der mindestens eine kinematische Variable des Fahrzeugs messen kann, und eine Steuereinheit umfasst, die diese mindestens eine kinematische Variable erfassen kann und ein dieser kinematischen Variablen entsprechendes Steuersignal in Richtung des Kopplungsmechanismus senden kann, um diesen zu betätigen.

17. Vorrichtung nach Anspruch 15, **dadurch gekennzeichnet, dass** sie einen Fühler umfasst, der dazu bestimmt ist, durch einen Fahrer des Fahrzeugs manipuliert zu werden, um den Kopplungsmechanismus zu betätigen.

18. Fahrzeug, umfassend eine Stabilisatorvorrichtung nach einem der Ansprüche 15 bis 17.
